# EUROPEAN PATENT APPLICATION

(11) **EP 1 862 069 A1**
(43) Date of publication of application: **05.12.2007**
(21) Application number: 06023867.2
(22) Date of filing: 17.11.2006
(51) Int. Cl.: A01K 63/04, B01D 17/02, B01D 21/00, C02F 1/24

(54) **Automatic lifting level controller for the discharge of foam**

(30) Priority: 31.05.2006 CN 200610060990
(71) Applicant: Hikari Hight-tech Ind.(china)Ltd., Guangzhou (CN)
(72) Inventor: Wong, Tommy Chi-Kin, Kowloon Bay (HK)
(74) Representative: Haft, von Puttkamer, Berngruber

(57) **Abstract**

An automatic lifting level controller (14A) for the discharge of foam is mainly to install a foam collection port (142), a foam discharge port (1524') and foam guide channel on a body, which has a floating chamber (145) that moves up and down according to the water levels. It is installed in a protein skimmer (10) to reinforce the functionality and practicability of the protein skimmer by sucking and discharging the foams fractionated by the protein skimmer from the seawater or fresh water.

## Description

### BACKGROUND OF THE INVENTION

### I. Filed of the Invention

The present invention relates to a level control device for the discharge of foam, especially to a level controller that can automatically move up and down.

### II. Description of the Invention

The aquarium, fish bowl, fishpond and sludge processing apparatus of the prior art are usually equipped with a separator for the purification of water, i.e. the oil skimmer, the protein skimmer in the aquarium.

Take the protein skimmer as example, the protein skimmers that are sold in the current markets work in general by injecting massive, very fine air bubbles by means of using either lime wood air stone or water pump. The rising air bubbles act as a lift, allowing the protein or oil in the water to attach to the bubbles and hitch a ride to the surface, where they are captured in a foam collection device. But the pollutants in the water, the specific gravity of the water and the quantity of injected air may affect the rising diversion of the air bubbles that shall decide either the quantity or the rising level of the air bubbles. The protein skimmer of the prior art comprises a foam collection device which is horizontally fixed cannot automatically move up and down according the rising levels of air bubbles. Under certain circumstances, the air bubbles may escape from the capture of the foam collection device and the organic compound attaching thereto may deposit in the water. Besides, the air bubbles may be in an excessive quantity that would urge intensive cleanings to the foam collection device. From the foregoing description, it is understood that the foam collection device attached to a fixed position may obstruct the function of a protein skimmer.

Therefore, providing an automatic lifting level controller for the discharge of foam that avoids the foregoing drawbacks is a pressing technical issue to be solved.

### SUMMARY OF THE INVENTION

Main objective of the present invention is to provide an automatic lifting level controller for the discharge of foam that allows all the air bubbles lifting the waste substance from the seawater or fresh water to be captured and disposed of by the protein skimmer.

To achieve the foregoing objective, the automatic lifting level controller of the present invention is a body, on which are installed a foam collection port, a foam discharge port and a foam guide channel and in which is installed a floating chamber that can move up and down according to the water or foam's buoyancy.

The foregoing floating chamber is made of buoyant material or by a closed structure that can memorize the air.

The foregoing floating chamber has at least one porthole to install the buoyancy controller for discharging some of the air in the chamber so as to adjust the buoyancy of the floating chamber.

The foregoing foam discharge port has a valve to control the quantity of the air bubbles to be discharged.

The foregoing valve comprises a joint unit and a control unit that are installed above the foam discharge ports. The control unit comprises several guide holes and stoppers that correspond to the accesses on the joint unit and a discharge structure that connects to the guide holes. The control unit, which is parked on top of the joint unit, can move around for the guide holes or stoppers to connect to the accesses so as to obstruct or stop the foam discharge ports discharging the air bubbles.

The foregoing discharge structure is a discharge port that connects the accesses to outside.

The foregoing discharge structure comprises a lumen, which connects to the accesses, and a discharge port, which connects the lumen to outside.

The foregoing body comprises a cylinder discharge section where the floating chamber is installed on the bottom and the inner wall is extended outwardly to form a foam collection port.

The foregoing discharge section has a joint unit and several partitions inside that form the foam discharge ports.

A diversion pillar, which is made of buoyant material or by a closed structure that can memorize the air, is installed between the foregoing discharge section and the foam collection port.

The passage between the foregoing diversion pillar and the foam guide channel narrows to the top from the bottom.

The foregoing joint unit comprises a plinth that is locked on the top of the foregoing discharge section. This plinth has a joint element installed on the surface of one side and a holding element on the surface of the other side. The joint element is to be fixed on the joint base of the discharge section. There is a mortise to load the holding element on the foregoing control unit.

The foregoing joint base has thread hole to load the bolt on the foregoing joint unit.

The present invention provides an automatic lifting level controller for the discharge of foam that is an aqua décor and can insure the purification of water, comprising a body, on which are installed a foam collection port, a foam discharge port, and a foam guide channel, and in which is installed a floating chamber moving up and down according to the water or foam's buoyancy. By adopting the automatic lifting level controller of the present invention, the foams fractionated from the seawater or fresh water by the protein skimmer can all be captured for discharge.

### BRIEF DESCRIPTION OF THE DRAWINGS

Fig. 1 is a cross-sectional view of a protein skimmer where an automatic lifting level controller - the first embodiment of the invention is installed.
Fig. 2 is a cross-sectional view of the producer of Fig. 1.
Fig. 3 is a perspective view of the protein skimmer of Fig. 1.
Fig. 4 and 5 are three-dimensional views of the automatic lifting level controller.
Fig. 6 and 7 are three-dimensional views of the joint unit.
Fig. 8 and 9 are three-dimensional views of the control unit.
Fig. 10 is a three-dimensional exploded view of a protein skimmer where the automatic lifting level controller - the second embodiment of the invention is installed.
Fig. 11 is a perspective view of the protein skimmer of Fig. 10.
Fig. 12 and 13 are three-dimensional view of another control unit.
Fig. 14 is a three-dimensional view of a protein skimmer.
Fig. 15 is a three-dimensional view of a protein skimmer.
Fig. 16 is a three-dimensional view of a protein skimmer.
Fig. 17 is a three-dimensional exploded view of a protein skimmer where the automatic lifting level controller - the third embodiment of the invention is installed.
Fig. 18 and 19 are three-dimensional view of the automatic lifting level controller of Fig. 17.
Fig. 20 is a three-dimensional exploded view of a protein skimmer where the automatic lifting level controller - the fourth embodiment of the invention is installed.
Fig. 21 and 22 are three-dimensional view of the control unit of Fig. 20.
Fig. 23 and 24 are three-dimensional view of an automatic lifting level controller - the fourth embodiment of the invention.
Fig. 25 is a three-dimensional exploded view of a protein skimmer where an automatic lifting level controller - the second embodiment of the invention is installed.
Fig. 26 is a three-dimensional exploded view of a protein skimmer where an automatic lifting level controller - the sixth embodiment of the invention is installed.
Fig. 27 is a three-dimensional exploded view of a protein skimmer where an automatic lifting level controller - the seventh embodiment of the invention is installed.
Fig. 28 is a three-dimensional exploded view of a protein skimmer where an automatic lifting level controller - the eighth embodiment of the invention is installed.

### DESCRIPTION OF THE PREFERRED EMBODIMENT

In order that the structure, installation and desired features of the present invention will be better understood, the preferred embodiments thereof are described in detail by way of example, with reference to the accompanying drawings.

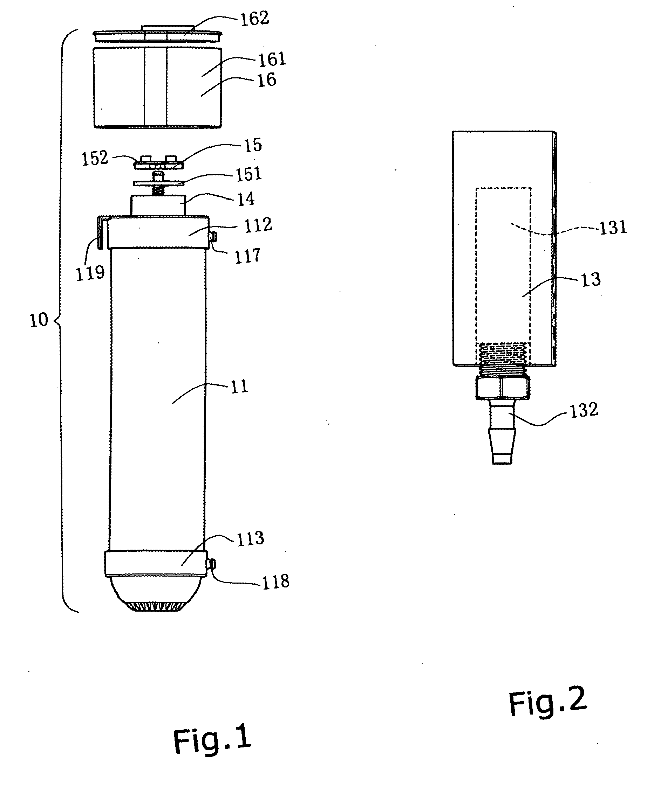

The first embodiment of the present invention is shown in Fig. 1 to 3, wherein the automatic lifting level controller 14 is mainly installed in a protein skimmer, oil skimmer or any skimmer that is utilized for removing the waste substance on or beneath the water surface. The protein skimmer 10 is utilized as an example to assist the description of the present invention and is not intended as definition of the limits of the present invention.

The protein skimmer 10 in this embodiment comprises a cylinder tube 11 wherein an isolation chamber 12 is installed on the bottom to isolates the air bubbles, a producer 13 is accommodated in the isolation chamber 12 to produce the air bubbles and a valve 15 that controls the discharge of air bubbles is installed on top of the automatic lifting level controller 14. Besides, a foam collection device 16 that houses top half of the automatic lifting level controller 14 is parked on top of the cylinder tube 11. The cylinder tube of the protein skimmer 10 in this embodiment may be of any cubic shapes.

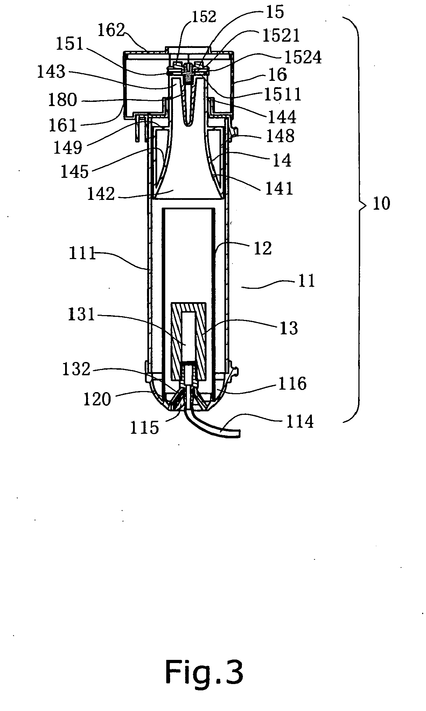

The cylinder tube 11 as shown by Fig. 1 and 3 comprises a lumen 111, a top cap 112 and a bottom cap 113 where has a vent hole in the center. The producer 13 is connected to an external air supply via a hose 114. The water inlet 115 that connects to the isolation chamber 12 is around the vent hole on the bottom of the bottom cap 113. The water outlet 116 that protrudes the lumen of the cylinder tube 11 is around the water inlet 115 on the bottom of the bottom cap 113. The top cap 112 comprises a pendant lever 119, which is extended from the top of the top cap 112, and a 1^{st} positioning tenon 117, which is on the external wall of the top cap 112, on the opposite side to the pendant lever 119. A 2^{nd} positioning tenon 118, which is on the external wall of the bottom cap 113, is aligned with the 1^{st} positioning tenon 117. The isolation chamber 12 accommodated in the lower part of the cylinder tube is also a cylinder.

The producer 13 as shown in Fig. 2 and 3 comprises a lumen 131 and a pipefitting 132 that connects the lumen 131 to the hose 114 so as to convoy the air from the external air supply into the lumen 131. The producer 13 can thus produce the air bubbles on its surface. The water that comes into the isolation chamber 12 via the water inlet 115 can be well mixed with the air bubbles on the surface of the producer 13. Due to the surface tension, the air bubbles act as a lift that allow the organic compound and waste substance (i.e. the protein) to attach to the air bubbles and hitch a ride to the surface. The water is thus purified and goes out of the isolation chamber via the water outlet 116, located between the cylinder tube 11 and the isolation chamber 12. Furthermore, an acceleration structure 120 is installed around the wall of the water inlet 115 so as to accelerate the skimming speed and reinforcing the skimming effectiveness.

The first embodiment as shown in Fig. 3, 4 and 5, wherein the automatic lifting level controller 14 comprises a body 141 where has a foam collection port 142 on the top, a foam discharge port 143 on the bottom, a guide channel, which is located between the two ports to connect the two, and a floating chamber 145 that automatically moves up and down according to the water or foam's buoyancy. The body 141, which floats on the water surface inside the cylinder tube 11 of the protein skimmer 10, has its upper part jutting out thereof. The floating chamber 145, found in the upper part of the cylinder tube 11, is on the contact to the water surface.

Inside the body 141, there is a discharge element 144 that is a vertically positioned cylinder and penetrates through the hole of the top cap 112 into the foam collection device 16. In the lower part of the body 141, there are the floating chamber 145, which narrows to the top from the bottom, and a foam collect port 142 formed by the inner wall of the body.

The foam collection port 142 as shown in Fig. 3 that narrows to the top from the bottom is in a cone shape, which is the optimal choice for the embodiment. Besides, the discharge element 144 is divided into two foam discharge ports by a partition 147, where a joint base 146 is located in the center.

The floating chamber 145, which is bell-bottom narrowing to the top from bottom, comprises the inner wall 150, the extension portion 148 and the support portion 149.

A diversion pillar 180(the cone shape is the optimal choice) is right beneath the joint base 146 and in the foam guide channel that is located between the discharge element 144 and the foam collection port 142, and whose dimensions are subject to the specific gravity of water.

The extension portion 148 is vertically inserted into the lumen of the cylinder tube 11 that the support portion 149 can be combined with the top cap 112 so as to position the automatic lifting level controller 14 on the top of the cylinder tube 11. A sealed space is formed among the support portion 149, the extension portion 148 and the inner wall 150 of the cylinder tube lumen that provides the floating chamber 145 with certain buoyancy.

The floating chamber 145 can be made of material that has lower bubble density than water or foam or by a sealed structure that can memorize the air. The latter as shown in Fig. 3 floats on the water surface inside the cylinder tube 11 and can move up and down according to the water levels that allows the automatic lifting level controller 14 to automatically move up and down according to the quantity of the air bubbles, the water levels so as to timely discharge the air bubbles. No doubt the automatic lifting that exempts the user from manual operation is a practical feature of the present invention.

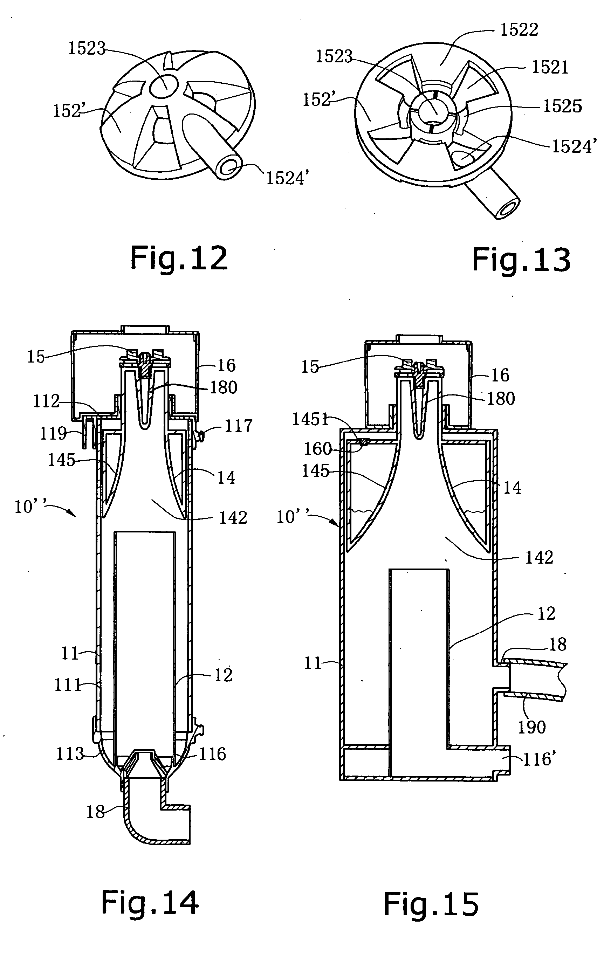

According to the above description, the floating chamber 145 can be made either by a sealed space or of material that has lower bubble density than water or foam. It may have more than one porthole 1451 where to install a buoyancy controller 160 that can discharge some of the air in the chamber so as to adjust the buoyancy of the floating chamber 145, per Fig. 15 and following descriptions.

The rising air bubbles in the cylinder tube 11 are sucked into the foam collection port 142 and guided through the foam guide channel to the foam discharge ports 143. The cone-shaped diversion pillar 180 is in a bell-bottomed foam guide channel that assures the foam collection port to fast suck the air bubbles.

As shown in Fig. 2 and Fig. 6 to 9 that a valve 15 is installed at the foam discharge port 143 of the automatic lifting level controller 14 for controlling the discharge of the air bubbles. In this embodiment, the valve 15, which is installed on the top of the foam discharge port 143, comprises a joint unit 151 and a control unit 152. The joint unit comprises guide holes 1511 where the foam discharge ports 143 jut out. The control unit 152 is installed on top of the joint unit 15 and can move around so as to allow its accesses 1521 or stoppers 1522 connecting to the guide holes 1511. The control unit 152 also comprises a discharge structure that connects to the accesses 1521. Description of the discharge structure is as follows.

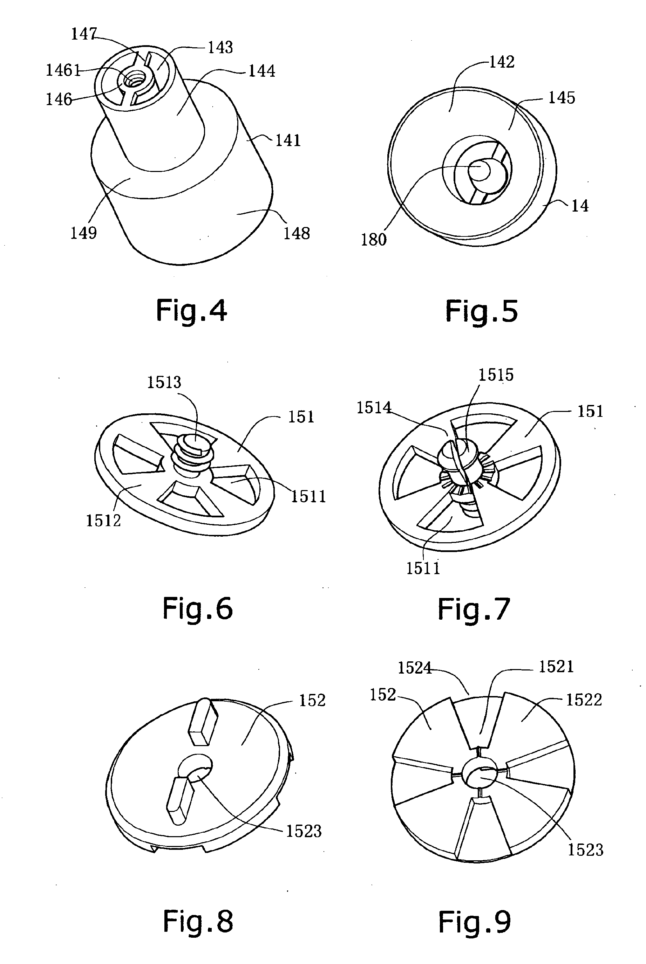

The joint unit 151 comprises a disc-shaped plinth 1512 where a joint element 1513 is installed in the center on the surface of one side and a holding element 1514 on the surface of the other side. The joint element 1513 is loaded into the joint base 146 of the discharge element 144; specifically, screwing the joint element 1513, which is a bolt, into the joint base 146, which is a thread hole 1461 (Fig. 4) so as to fasten the joint unit 151 on the automatic lifting level controller 14. The control unit 152 and the joint unit 151 are joined by inserting the resilient tenon 1515 of the holding element 1514 into the mortise of the control unit 152. The resilient tenon 1515 is divided into two parts that allows the control unit 152 to move around after the joint.

The four guide holes 1511 are equally spaced on the plinth 1512 and two foam discharge ports 143 can jut out from the guide holes. The accesses 1521 and the stoppers 1522 on the control unit 152 correspond to the guide holes 1511 on the joint unit 151. When the control unit 152 moves to certain angles, the stoppers 1522 may occlude partially or completely the guide holes 1511 to obstruct or stop the air bubbles from coming out from the foam discharge ports 143. A discharge structure that connects to the accesses 1521 is installed on the control unit 152 for the control unit 152 to discharge the air bubbles. The discharge structure in this embodiment refers to the discharge ports 1524 that guide the air bubbles discharged at the accesses 1521 into the foam collection device 16.

The foam collection device 16 as shown in Fig. 1 and 3 comprises a jar 161 and a lid 162 that covers the jar 161. The jar 161, can receive the air bubbles discharged at the discharge port 1524 because it houses the discharge element 144 where the valve 15 is installed on the top to control the discharge of the air bubbles.

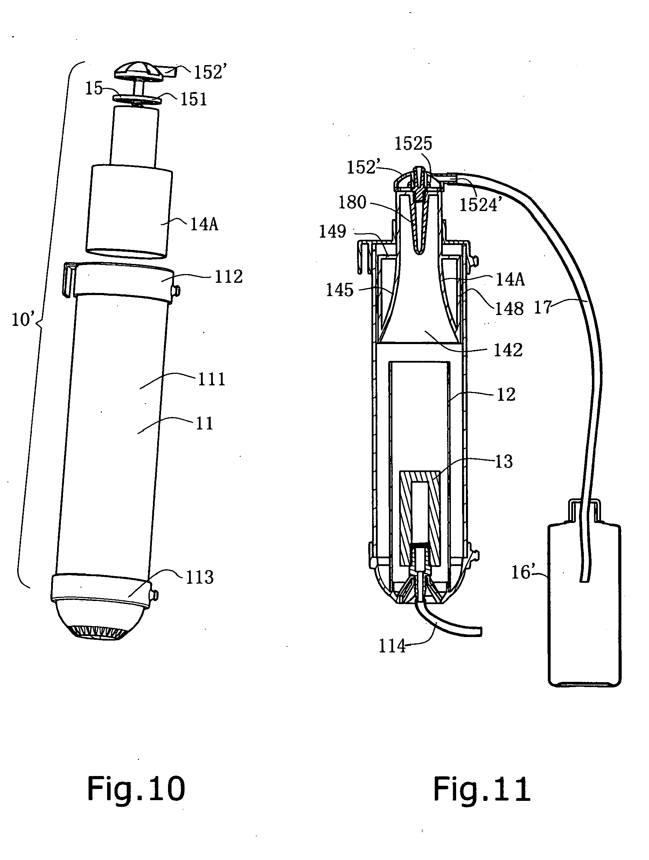

The automatic lifting level controller 14A shown in Fig. 10 and 11 is the second embodiment of the present invention and installed in a protein skimmer 10', wherein the elements identical to those of the automatic lifting level controller 14 - the first embodiment share the same notations and will not go into details. The difference of the two embodiments lies in: the control units 152, 152' are incorporated in different structures. Specifically, the discharge structure of the control unit 152' as shown in Fig. 12 and 13 comprises a lumen 1525 connecting to the accesses 1521 and a discharge port 1524' connecting the lumen 1525 to outside. The air bubbles discharged from the discharge port 1524' are conducted by a hose 17 into a foam collection device 16', which is a bottle in this embodiment.

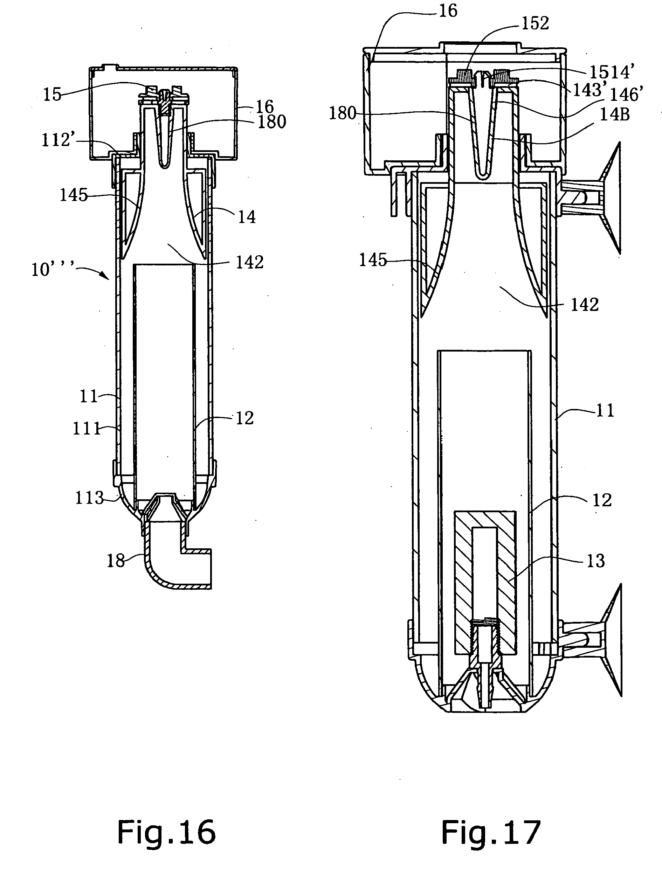

Other two protein skimmers 10" that are shown in Fig. 14 and 15 need no producer 13 as the air and the water to be purified are directly pumped into the isolation chamber 12 via an inlet pipe 18. The water outlet 116 of the protein skimmer 10" shown in Fig. 14 is identical to that of the first embodiment. The inlet pipe 18 of the protein skimmer 10" shown in Fig. 15 is a casing pipe that connects to a hose 190 for receiving the air and the water to be purified. The purified water goes into the isolation chamber 12 and is discharged at the water outlet 116'. Furthermore, the floating chamber 145 of the protein skimmer 10" shown in Fig. 15 has a combination of porthole 1451 and buoyancy controller 160 on the support portion 149 that can discharge part of the air in the chamber to adjust the buoyancy of the floating chamber. Besides, according to actual needs, the combination can be made of several portholes 1451 and buoyancy controllers 160. Another protein skimmer 10"' that is shown in Fig. 16 is almost identical to the protein skimmer 10", except the top cap 112', where neither of pedant lever 119 and the 1^{st} positioning tenon 117 is installed.

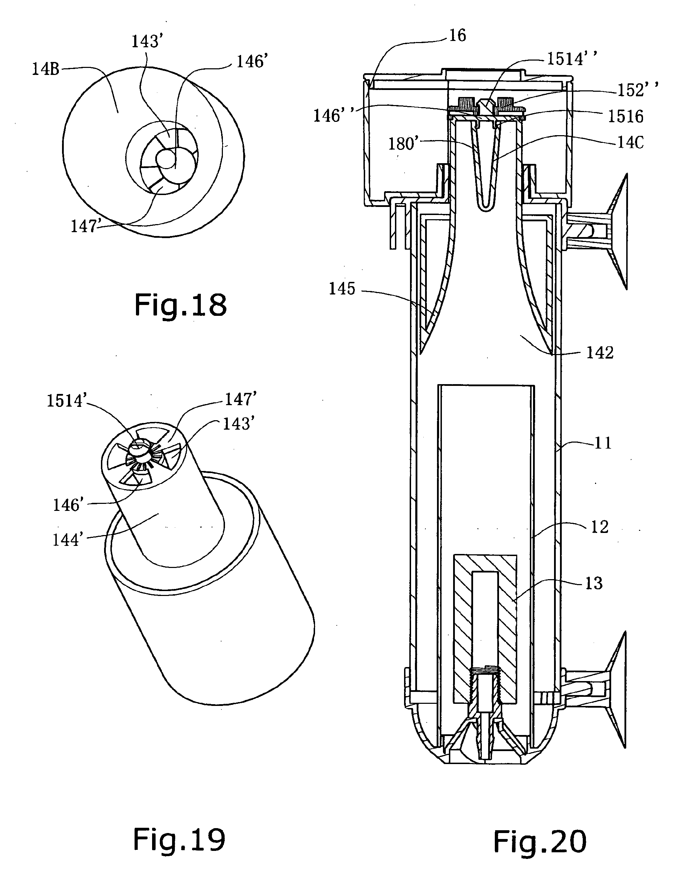

The automatic lifting level controller 14B shown in Fig. 17, 18 and 19 is the third embodiment of the present invention, wherein the elements identical to those of the automatic lifting level controller 14 - the first embodiment share the same notations and will not go into details. The difference of the two embodiments lie in: the four foam discharge ports 143'(Fig. 19) in this embodiment, which are constituted among the joint base 146', partition 147' and inner wall of the discharge element 144, are identical to guide holes 1511 of the first embodiment. Furthermore, the holding unit 1514' on top of the joint base 146', which is identical to the holding unit 1514 of the first embodiment in terms of structure, is installed to hold the control unit 152. The guide holes 1511 can be connected to the accesses 1521 for discharging the air bubbles into the foam collection device 16 or to the stoppers 1522 for suspending the discharge of air bubbles. From the foregoing description, it is understood that even without a joint unit 151 the automatic lifting level controller 14B - the third embodiment may achieve the function that the first embodiment achieves.

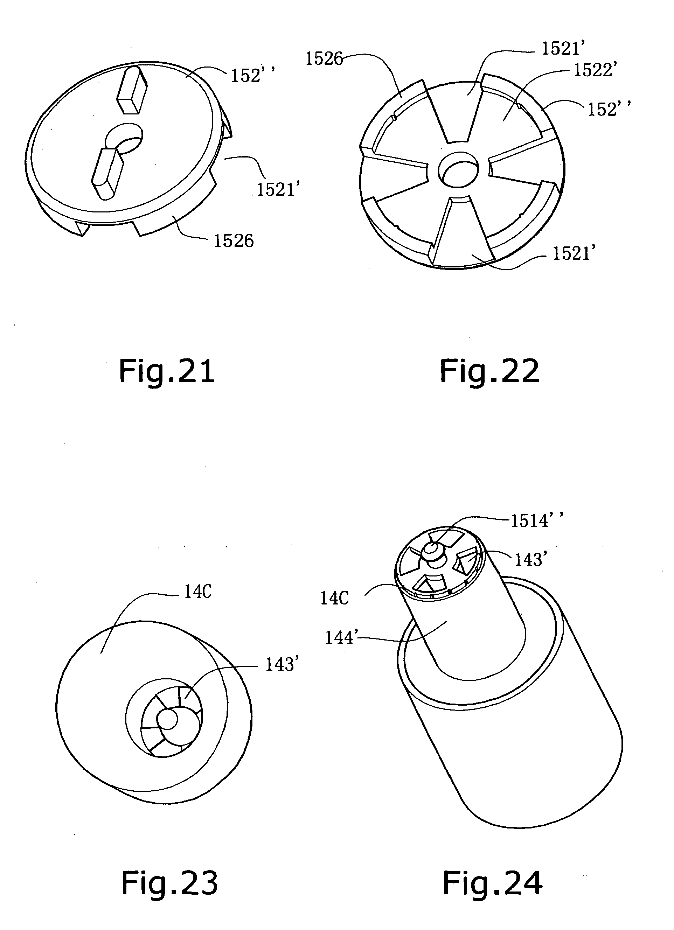

The automatic lifting level controller 14C - the fourth embodiment of the present invention is shown in Fig. 20 to 24, wherein the structure is identical to that of the automatic lifting level controller 14B - the third embodiment, the identical elements share the same notations. Differences of the two embodiments lie in the control unit, the holding unit, the cone-shaped diversion pillar and the joint base. With regard to the control unit 152", it functions in exactly the same way as what the control unit of the first embodiment does; its accesses 1521' and stoppers 1522' are almost identical to those of the first embodiment except each of its stoppers 1522' comprises a raised rim 1526 extending from the stopper itself. The raised rim 1526 can be locked to the discharge element 144' on the top of the foam discharge port 143' so as to allow the control unit 152" to cap the foam discharge ports 143'. With regard to the holding element 1514", unlike the holding unit in the third embodiment, it is a tenon formed in one-piece that can be loaded into the mortise of the control unit 152". With regard to the cone-shaped diversion pillar 180" and the joint base 146", they are two separate elements that can be joined by hooking the teeth 1516 on the joint base 146" to the surface of lumen of the diversion pillar 180". According to the foregoing description, the stoppers 1522' and the accesses 1521' can stop or obstruct the foam discharges ports 143 from discharging the air bubbles and the discharged air bubbles go into a foam collection device 16. It is thus understood that both the fourth embodiment and the first embodiment achieve the same function.

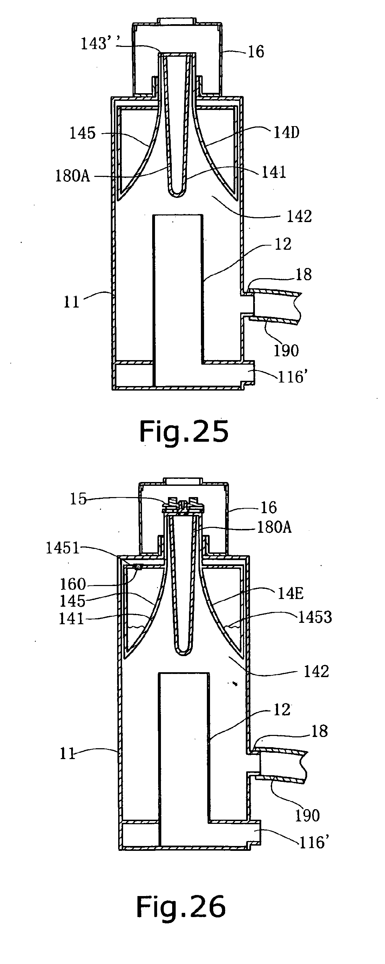

The automatic lifting level controller 14D shown in Fig. 25 is the fifth embodiment of the present invention, wherein the elements that are identical to those in Fig. 1 and 5 share the same notations. This embodiment differs from others by the valve, diversion pillar and floating chamber. No valve 15 is installed in this embodiment to control the flow of air bubbles and allows the air bubbles discharged at the foam discharge ports 143 to go directly into the foam collection device 16. The cone-shaped diversion pillar 180A in this embodiment not only guides the flows but also functions as a floating chamber 145 because it has larger dimensions that are bigger than those of the diversion pillar 180 in the first embodiment and can float on the water in the cylinder tube 11. Besides, the floating chamber 145 has no porthole 1451.

The automatic lifting level controller 14E as shown in Fig. 26 is the sixth embodiment of the present invention, wherein the elements that are identical to those of Fig. 2 and 5 share the same notations. It shares with the first embodiment the same operation principle in adopting the valves 15 to control the discharge of air bubbles. Buoyancy of the floating chamber 145 can be adjusted by injecting some water 1453 into the chamber. However, the injection of the water 1453 is controlled by a combination of porthole 1451 and buoyancy controller 160 that is installed on the floating chamber 145. Furthermore, the cone-shaped diversion pillar 180A and the floating chamber 145 are made in one-piece.

With reference to Fig. 25 and 26, the cone-shaped diversion pillar 180A is located in the center of the body 141 and the floating chamber 145 is placed around the center.

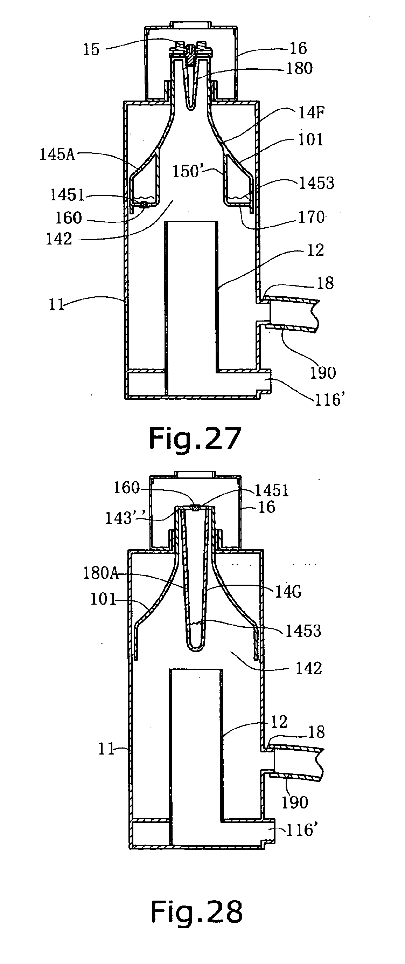

The automatic lifting level controller 14F shown in Fig. 27 is the seventh embodiment of the present invention, wherein the elements that are identical to those of Fig. 1 and 5 share the same notations. The floating chamber 145A differs from the floating chamber 145 in terms of shape; specifically, the floating chamber 145A is a sealed space that is constituted by three walls: the inner wall 150', the bottom 170, which is a horizontal extension from the inner wall 150', and the outer wall 101, which is a downward extension from the outer wall of the discharge element 144. The porthole 1451 and buoyancy controller 160 that are installed on the bottom 170 are identical to those of Fig. 26 and will not go into details.

The automatic lifting level controller 14G shown in Fig. 28 is the eighth embodiment of the present invention, wherein the elements that are identical to those of Fig. 27 share the same notations. In this embodiment, the outer walls 101 lean against the inner walls of the cylinder tube 11 to form the space that holds the automatic lifting level controller 14G from being inclined. No floating chamber 145A exists in this embodiment and whose function is resumed by a cone-shaped diversion pillar 180A, which is identical to the one shown in Fig. 25 and 26 and where a porthole 1451 is installed on the top to be combined with a buoyancy controller 160 so as to control the buoyancy of the diversion pillar 180A.

New characteristics and advantages of the present invention covered by this document have been set forth in the foregoing description. Understanding is sought however, that the drawings are for the purpose of illustration only and not intended to be a definition of the limits of the present invention. Changes in methods, shapes, structures or devices may be made in details without exceeding the scope of the invention by those who are skilled and knowledgeable in the field.

To sum up, the "automatic lifting level controller" of the present invention can collect the pollutant air bubbles discharged from the protein skimmer, in either seawater or fresh water, so as to possess the "practicability" and the "advancement" of the industry. Furthermore, in view the structure of the present invention has never been disclosed in any publication or for any application, the present invention conforms to the requirements of the new utility model. This document is, therefore, submitted for applying the patent registration pursuant to the Patent Act.

## Claims

1. An automatic lifting level controller for the discharge of foam comprises a body, on which are installed a foam collection port, a foam discharge port and a foam guide channel, the characteristic lies in: the body includes a floating chamber that can move up and down according to the water or foam's buoyancy.

2. The automatic lifting level controller of claim 1, the characteristic lies in: the floating chamber can be made of buoyant material or by a closed structure that can memorize the air.

3. The automatic lifting level controller of claim 1, the characteristic lies in: there are more than one porthole installed on the floating chamber to install a buoyancy controller that discharges part of the air in the chamber so as to control the buoyancy of the floating chamber.

4. The automatic lifting level controller of claim 1, the characteristic lies in: the foam discharge port has a valve to control the quantity of the air bubbles to be discharged.

5. The automatic lifting level controller of claim 4, the characteristic lies in: the valve comprises a joint unit and a control unit that are installed above the foam discharge ports. The former has guide holes that correspond to the accesses and stoppers on the latter. Besides, a discharge structure that connects to the accesses is installed on the control unit.

6. The automatic lifting level controller of claim 5, the characteristic lies in: the discharge structure is a discharge port that connects the accesses to outside.

7. The automatic lifting level controller of claim 5, the characteristic lies in: the discharge structure comprises a lumen that connects to the accesses and a discharge pipe that connects the lumen to outside.

8. The automatic lifting level controller of claim 1, the characteristic lies in: the body comprises a cylinder discharge section where the foam collection port is formed by the inner wall and enlarges from the top to the bottom.

9. The automatic lifting level controller of claim 8, the characteristic lies in: inside the discharge section, there are a joint base and the foam discharge ports, which are formed by the joint base, partition and the inner wall of the discharge section.

10. The automatic lifting level controller of claim 9, the characteristic lies in: a diversion pillar that is made of buoyant material or by a closed structure that can memorize the air is installed between the discharge section and the foam collection port.

11. The automatic lifting level controller of claim 10, the characteristic lies in: the passage between the diversion pillar and the foam guide channel narrows to the top from the bottom.

12. The automatic lifting level controller of claim 5, the characteristic lies in: the joint unit comprises a plinth that can be locked to the top of the discharge section. The plinth comprises a joint element on the surface of one side and a holding element on the surface of the other side. The joint element is fixed on the joint base of the discharge section. The holding element on the control unit has a mortise.

13. The automatic lifting level controller of claim 12, the characteristic lies in: the joint base has thread hole to load the tenon on the joint unit.
